# EUROPÄISCHE PATENTSCHRIFT

(11) **EP 2 619 551 B1**
(45) Veröffentlichungstag und Bekanntmachung des Hinweises auf die Patenterteilung: **24.01.2018**
(21) Anmeldenummer: 11761324.0
(22) Anmeldetag: 16.09.2011
(51) Int. Cl.: G01N 21/41

(54) **SENSOR ZUR ÜBERWACHUNG EINES MEDIUMS**
SENSOR FOR MONITORING A MEDIUM
CAPTEUR DESTINÉ À LA SURVEILLANCE D'UN MILIEU

(30) Priorität: 21.09.2010 DE 202010012771 U; 21.09.2010 DE 102010041141
(43) Veröffentlichungstag der Anmeldung: 31.07.2013
(73) Patentinhaber: AB Elektronik Sachsen GmbH, 01774 Klingenberg (DE)
(72) Erfinder: BOJARSKI, Aldo, 01774 Höckendorf (DE); ERLER, Klaus, 23568 Lübeck (DE); KÜNZELMANN, Katrin, 01219 Dresden (DE); LEGNER, Andre, 01159 Dresden (DE); SMITH, Paul, Cambridge CB2 9HT (GB); STRAßBERGER, Tobby, 01774 Höckendorf (DE)
(74) Vertreter: Kailuweit & Uhlemann Patentanwälte Partnerschaft mbB
(86) Internationale Anmeldenummer: PCT/EP2011/066128
(87) Internationale Veröffentlichungsnummer: WO 2012/038347

(56) Entgegenhaltungen:
- EP-A2- 0 337 173
- DE-A1- 4 033 087
- GB-A- 2 460 305
- JP-A- 1 197 632
- JP-B- 50 017 147
- US-A1- 2009 122 300
- PIXTON B M ET AL: "Automated measurement of the refractive index of fluids", APPLIED OPTICS OPTICAL SOCIETY OF AMERICA USA, Bd. 47, Nr. 10, 1. April 2008 (2008-04-01) , Seiten 1504-1509, XP1513131, ISSN: 0003-6935

## Beschreibung

Die Erfindung betrifft Sensoren zur Überwachung eines Mediums mit wenigstens einer elektromagnetischen Strahlungsquelle und einem Detektor für elektromagnetische Strahlung, wobei sich das Medium im Strahlengang zwischen der elektromagnetischen Strahlungsquelle und dem Detektor befindet.

Durch die Druckschrift DE 10 2007 010 805 B3 ist ein Verfahren und eine Vorrichtung zur Bestimmung der Harnstoffkonzentration in einer Lösung bekannt. Dazu wird Licht unter verschiedenen Einfallswinkeln auf eine Grenzfläche zwischen einem dichteren und einem dünneren Medium, nämlich dem Körper und der Lösung, ausgesendet. Dazu muss eine Grenzfläche zwischen dem Körper und der Lösung vorhanden sein. Das Licht wird an der Grenzfläche je nach Einfallswinkel zum Teil reflektiert, wobei mit zunehmendem Einfallswinkel der von der Grenzfläche reflektierte Anteil des Lichts zunimmt. Die reflektierte Strahlung wird von einem entsprechend angeordneten ortsauflösenden Strahlungsdetektor detektiert.

Die Druckschrift DE 10 2008 056 559 A1 beinhaltet eine Sensoranordnung zur Detektion eines ersten flüssigen Mediums in einem zweiten flüssigen Medium mittels Reflektion eines emittierten Lichtstrahls sowie einem zugehörigen Empfänger. Dazu sind zwei in einem Gehäuse gekapselte Glasstablinsen parallel zueinander angeordnet. Die Glasstablinsen weisen einen anderen optischen Brechungsindex als die flüssigen Medien auf. Gegenüber den Glasstablinsen ist eine Reflektionsfläche angeordnet, die mit dem Gehäuse verbunden ist.

Durch die Druckschrift EP 0 337 173 A2 ist eine Einrichtung zur Detektion eines alkoholischen Gehalts bekannt. Der dabei verwendete Sensor besitzt eine elektromagnetische Strahlungsquelle und einen Detektor für elektromagnetische Strahlung, wobei sich das Medium im Strahlengang zwischen der elektromagnetischen Strahlungsquelle und dem Detektor befindet. Zwischen der elektromagnetischen Strahlungsquelle und dem Detektor befindet sich ein transparenter Körper als ein separater Bestandteil des Sensors mit einer Vertiefung für das Medium. Das Gehäuse nimmt den transparenten Körper auf, wobei letzterer gegenüber der Strahlungsquelle und dem Detektor abgedichtet ist.

Die Druckschrift DE 40 33 087 A1 beschreibt ein Sensorsystem zur Messung des absoluten Brechungsindexes und/oder der Dämpfung sowie deren Veränderung beim Durchgang durch Medien, die für die im Sensorsystem verwendete Wellenart und Wellenlänge transparent sind. Dabei werden zur Verbesserung der Empfindlichkeit der Sensoren Lichtquellen mit verschiedenen Wellenlängen verwendet.

Nachteilig sind, dass Ablagerungen und Verschmutzungen der Grenzfläche oder der Reflektionsfläche das Messergebnis verfälschen können.

Die Druckschrift JP 50 017147 B zeigt einen Sensor, dessen Gehäuse separate Bestandteile aufweist, an denen das zu untersuchende Medium anliegt. Eine elektromagnetische Strahlungsquelle und ein Detektor sind beabstandet zueinander in einem durch die transparenten Bestandteile bereichsweise begrenzten Gehäuseinneren angeordnet.

Der im Patentanspruch 1 angegebenen Erfindung liegt die Aufgabe zugrunde, die Stoffzusammensetzung eines Mediums einfach zu überwachen.

Diese Aufgabe wird mit den im Patentanspruch 1 aufgeführten Merkmalen gelöst.

Die Sensoren zur Überwachung eines Mediums mit wenigstens einer elektromagnetischen Strahlungsquelle und einem Detektor für elektromagnetische Strahlung, wobei sich das Medium im Strahlengang zwischen der elektromagnetischen Strahlungsquelle und dem Detektor als wenigstens einem eindimensionalen Sensor mit Fotodioden für die gebrochene elektromagnetische Strahlung befindet und ein bei Änderung des Mediums sich änderndes Spektrum erfassbar ist, zeichnen sich durch ihre einfache Realisierung aus.

Dazu ist ein erstes Teil des Gehäuses ein becherförmiges und aus einem für die Strahlung transparenten Material bestehendes einstückiges Formteil. Die elektromagnetische Strahlungsquelle, der Detektor und die Strahlung der elektromagnetischen Strahlungsquelle nacheinander zweimal ablenkende Spiegel sind im ersten Teil angeordnet, so dass die elektromagnetische Strahlungsquelle und der Detektor nebeneinander platzierbar sind. Die elektromagnetische Strahlungsquelle ist eine Strahlungen bestimmter Wellenlängen aussendende Strahlungsquelle. Das erste Teil besitzt eine Vertiefung oder einen Ausschnitt mit zwei Ebenen und winklig zueinander angeordneten sowie für die elektromagnetische Strahlung transparenten Wandbereichen für das Medium, so dass diese Wandbereiche und das sich an den Wandbereichen befindliche Medium ein die elektromagnetische Strahlung brechendes Prisma sind. Ein zweites Teil des Gehäuses ist ein Deckel, so dass ein in sich abgeschlossener Sensor realisiert ist. Der Detektor besteht aus in einer Reihe oder in einer Matrix angeordneten Fotodioden. Die elektromagnetische Strahlungsquelle und der Detektor sind mit einem Datenverarbeitungssystem verbunden, so dass nacheinander Strahlung verschiedener Wellenlänge im Prisma, gebildet aus den Wandbereichen und dem sich an den Wandbereichen befindlichen Medium, gebrochen und daraus resultierende Spektren erfass- und auswertbar sind. Weiterhin ist das Datenverarbeitungssystem ein jeweils den Ort der auf den Detektor gelangten elektromagnetischen Strahlung bestimmter Wellenlänge ermittelndes Datenverarbeitungssystem.

Durch den Sensor wird mittels des Durchlichtprinzips Medium überwacht. Durch das Prisma wird die elektromagnetische Strahlung an der Eintritts- und an der Austrittsfläche in Abhängigkeit der Wellenlänge gebrochen. Resultat ist ein Spektrum der elektromagnetischen Strahlungsquelle. Bei einer Änderung des Mediums ändert sich die Brechung der elektromagnetischen Strahlung insbesondere bei Durchtritt der Wandbereiche, so dass ein verändertes Spektrum entsteht. Die Position von Spektrallinien verschieben sich, so dass sich der Ort auf den Detektor auftreffender elektromagnetischer Strahlung bestimmter Wellenlänge verändert. Das wird mit dem Detektor erfasst, so dass eine Änderung des Mediums erfassbar ist. Das erfolgt beispielweise mit einem bekannten Datenverarbeitungssystem, welches mit dem Detektor verbunden ist. Das Datenverarbeitungssystem ist dazu insbesondere ein bekannter Mikrorechner.

Ein erstes Teil des Gehäuses ist ein becherförmiges und aus einem für die Strahlung transparenten Material bestehendes Formteil. Das erste Teil weist weiterhin eine Vertiefung oder einen Ausschnitt für das Medium auf. Abgeschlossen ist das Gehäuse mit einem Deckel als ein zweites Teil des Gehäuses. Im ersten Teil sind wenigstens die elektromagnetische Strahlungsquelle und der Detektor angeordnet. Der Bereich des Gehäuses mit der Vertiefung oder dem Ausschnitt ist im Medium platziert, so dass sich Medium auch in der Vertiefung oder dem Ausschnitt befindet. Über die winklig zueinander angeordneten Wandbereiche der Vertiefung oder des Ausschnitts wird die Strahlung aus- und nach Durchtritt des Mediums eingekoppelt.

Ein weiterer Vorteil besteht darin, dass ansonsten zu einer Intensitätsänderung führende Verschmutzungen am Gehäuse keinen Einfluss auf die Erfassung ausüben. Das Gleiche gilt für das Medium trübende Bestandteile im Medium. Entscheidend für die Erfassung ist der Auftreffort der elektromagnetischen Strahlung und nicht deren Intensität. Damit haben auch Alterungsprozesse der Strahlungsquelle und des Detektors keinen Einfluss auf den Sensor zur Überwachung eines Mediums.

Darüber hinaus zeichnet sich der Sensor dadurch aus, dass sich nur das Medium außerhalb des Gehäuses befindet. Alle Bestandteile des Sensors sind im Gehäuse angeordnet, so dass ein kompakter Sensor vorhanden ist. Im einfachsten Fall sind dazu die elektromagnetische Strahlungsquelle und der Detektor sich gegenüberstehend angeordnet, wobei sich ein Raum für das Medium dazwischen befindet.

Vorteilhafte Ausgestaltungen der Erfindung sind in den Patentansprüchen 2 bis 5 angegeben.

Die elektromagnetische Strahlungsquelle für elektromagnetische Strahlung bestimmter Wellenlängen ist nach der Weiterbildung des Patentanspruchs 2 eine Mehrfarben-Lumineszenzdiode.

Nach einem Beispiel dieser Beschreibung sind elektromagnetische Strahlungsquellen für Strahlungen verschiedener Wellenlänge und der Detektor mit einem Datenverarbeitungssystem verbunden, so dass nacheinander Strahlung verschiedener Wellenlänge im Prisma gebrochen und daraus resultierende Spektren erfass- und auswertbar sind. Dazu werden die elektromagnetischen Strahlungsquellen vorzugsweise getaktet betrieben, so dass eine örtliche Verschiebung einzelner Spektrallienien feststellbar ist. Die Empfindlichkeit des Sensors wird erhöht.

Im Strahlengang nach der elektromagnetischen Strahlungsquelle ist nach der Weiterbildung des Patentanspruchs 3 ein die elektromagnetische Strahlung beeinflussende Einrichtung angeordnet, so dass elektromagnetische Strahlung bestimmter Wellenlänge das Medium durchdringt und auf den Detektor gelangt. Das ist insbesondere ein Filter oder ein Gitter. Die Empfindlichkeit des Sensors ist erhöht.

Günstigerweise ist nach der Weiterbildung des Patentanspruchs 4 das Medium eine wässrige Lösung, so dass die Konzentration wenigstens eines Stoffes in der wässrigen Lösung erfassbar ist.

Ein Ausführungsbeispiel der Erfindung ist in den Zeichnungen jeweils prinzipiell dargestellt und wird im Folgenden näher beschrieben.

Es zeigen:
Fig. 1 ein Sensor zur Überwachung eines Mediums in einem Längsschnitt und
Fig. 2 ein Sensor in einer Schnittdarstellung.

Ein Sensor zur Überwachung eines Mediums besteht im Wesentlichen aus einer elektromagnetischen Strahlungsquelle 1, einem Detektor 2, einer die Strahlung ablenkenden Vorrichtung 2 und einem Gehäuse 5.

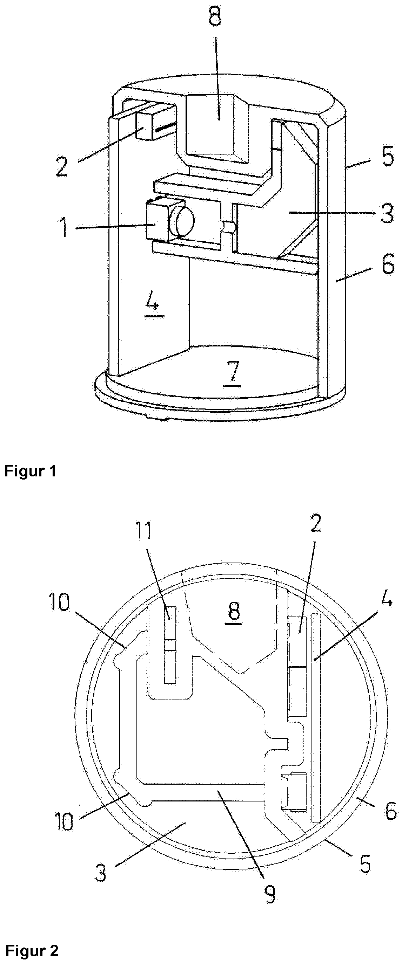

Die Fig. 1 zeigt einen Sensor zur Überwachung eines Mediums in einem Längsschnitt in einer prinzipiellen Darstellung.

Das Medium ist beispielsweise eine wässrige Lösung. Bekannterweise werden für die elektromagnetische Strahlungsquelle 1 eine Lumineszenzdiode 1 und für den Detektor 2 ein CCD-Sensor 2 mit Fotodioden eingesetzt, wobei CCD für Charge-coupled Device steht. Dieser ist als eindimensionaler (Zeile) oder zweidimensionaler (Matrix) CCD-Sensor 2 ausgeführt.

Die Lumineszenzdiode 1 und der CCD-Sensor 2 sind nebeneinander auf einer Leiterplatte 4 als Träger 4 angeordnet.

Die Leiterplatte 4 befindet sich in einem ersten Teil 6 des Gehäuses 5. Dieser erste Teil 6 ist becherförmig ausgebildet und besteht aus einem für die Strahlung der Lumineszenzdiode 1 transparenten Material. Weiterhin ist dieses erste Teil 6 ein einstückig ausgebildetes Formteil, welches einen Ausschnitt 8 / eine Aussparung für das Medium aufweist.

Im Strahlengang nach der Lumineszenzdiode 1 ist eine die Strahlung ablenkende Vorrichtung 3 mit zwei totalreflektierenden Prismen angeordnet, so dass die Strahlung nacheinander zweimal um 90° abgelenkt wird. Der Eintritt der Vorrichtung 3 ist in der Ebene der Lumineszenzdiode 1 angeordnet, so dass deren elektromagnetische Strahlung in die Vorrichtung 3 eingekoppelt wird. Der Austritt zur Auskopplung der zweimal um 90° abgelenkten elektromagnetischen Strahlung der Lumineszenzdiode 1 ist in der Ebene des CCD-Sensors 2 angeordnet. Zwischen der Vorrichtung 3 und dem CCD-Sensor 2 befindet sich der Ausschnitt 8 für das Medium, so dass über die Wandbereiche des Ausschnitts 8 die elektromagnetische Strahlung den durch den Ausschnitt 8 ausgebildeten Raum mit dem Medium durchdringt. Die Wandbereiche sind eben ausgeführt und winklig zueinander angeordnet. Der die Wandbereiche einschließende Winkel ist kleiner 180°. Die Wandbereiche sind dazu weiterhin gegenüber der elektromagnetischen Strahlung so angeordnet, dass im Zusammenhang mit dem Medium ein die elektromagnetische Strahlung brechendes Prisma vorhanden ist.

Die optischen Elemente sind dabei so angeordnet, dass das Spektrum der Strahlung auf den CCD-Sensor 2 gelangt. Dabei wird der Ort vorbestimmter Spektrallinien erfasst. Ändert sich die Zusammensetzung des Mediums, ändert sich auch die Brechung. Die Spektrallinien der Strahlung verschieben sich. Über den CCD-Sensor 2 ist diese Verschiebung örtlich bestimmbar.

Das kann auch bezüglich der Veränderung elektromagnetischer Strahlung einer bestimmten Wellenlänge erfolgen. Dabei wird eine elektromagnetische Strahlungsquelle 1 mit wenigstens einer bestimmten Wellenlänge eingesetzt.

Mit dem Einsatz einer Mehrfarben-Lumineszenzdiode 1 als elektromagnetische Strahlungsquelle 1 ist elektromagnetische Strahlung bestimmter Wellenlängen einfach zu realisieren.

In einer ersten Ausführungsform ist die Lumineszenzdiode 1 gegenüber dem Medium beabstandet über dem CCD-Sensor 2 angeordnet (Darstellung in der Fig. 1).

In einer zweiten Ausführungsform ist die Lumineszenzdiode 1 beabstandet neben dem CCD-Sensor 2 angeordnet.

Die Fig. 2 zeigt dazu einen Sensor in einer prinzipiellen Schnittdarstellung.

Im Strahlengang nach der Lumineszenzdiode 1 ist die die Strahlung ablenkende Vorrichtung 3 mit die Strahlung reflektienden Einrichtungen 10 in Form von Spiegeln 10 in einem Lichtleitkanal 9 angeordnet, so dass die Strahlung nacheinander zweimal um 90° abgelenkt wird. Die die Strahlung ablenkende Vorrichtung 3 und das erste Teil 6 des Gehäuses 5 sind dabei entweder mehr- oder einstückig ausbildbar. Die Lumineszenzdiode 1, der CCD-Sensor 2, die Vorrichtung 3 und der Ausschnitt 8 befinden sich dabei in einer Ebene. In einer Variante dieser zweiten Ausführungsform ist eine Schlitzblende 11 ein Bestandteil der Vorrichtung 3.

Zur Steuerung der Messung und Auswertung der Messergebnisse sind die elektromagnetische Strahlungsquelle 1 und der CCD-Sensor 2 mit einem Datenverarbeitungssystem zusammengeschaltet. Das ist ein bekannter Mikrorechner auf der Leiterplatte 4 mit einem Mikrocontroller als zentrale Verarbeitungseinheit.

Das zweite Teil 7 des Gehäuses 5 ist ein Deckel 7, so dass ein in sich abgeschlossener Sensor zur Überwachung des Mediums realisiert ist.

## Patentansprüche

1. Sensor zur Überwachung eines Mediums mit wenigstens einer elektromagnetischen Strahlungsquelle und einem Detektor für elektromagnetische Strahlung, wobei sich das Medium im Strahlengang zwischen der elektromagnetischen Strahlungsquelle und dem Detektor als wenigstens einem eindimensionalen Sensor mit Fotodioden für die gebrochene elektromagnetische Strahlung befindet und ein bei Änderung des Mediums sich änderndes Spektrum erfassbar ist, und wobei
- ein erstes Teil (6) des Gehäuses (5) ein becherförmiges und aus einem für die Strahlung transparenten Material bestehendes einstückiges Formteil ist,
- die elektromagnetische Strahlungsquelle (1), der Detektor (2) und die Strahlung der elektromagnetischen Strahlungsquelle (1) nacheinander zweimal ablenkende Spiegel (10) im ersten Teil (6) angeordnet sind, so dass die elektromagnetische Strahlungsquelle (1) und der Detektor (2) nebeneinander platziert sind,
- die elektromagnetische Strahlungsquelle (1) eine Strahlungen bestimmter Wellenlängen aussendende Strahlungsquelle ist,
- das erste Teil (6) eine Vertiefung oder einen Ausschnitt (8) mit zwei Ebenen und winklig zueinander angeordneten sowie für die elektromagnetische Strahlung transparenten Wandbereichen für das Medium besitzt, so dass diese Wandbereiche und das sich an den Wandbereichen befindliche Medium ein die elektromagnetische Strahlung brechendes Prisma sind,
- ein zweites Teil (7) des Gehäuses (5) ein Deckel (7) ist, so dass ein in sich abgeschlossener Sensor realisiert ist,
- der Detektor (2) aus in einer Reihe oder in einer Matrix angeordneten Fotodioden besteht,
- die elektromagnetische Strahlungsquelle (1) und der Detektor (2) mit einem Datenverarbeitungssystem verbunden sind, so dass nacheinander Strahlung verschiedener Wellenlänge im Prisma, gebildet aus den Wandbereichen und dem sich an den Wandbereichen befindlichen Medium, gebrochen und daraus resultierende Spektren erfass- und auswertbar sind, und
- das Datenverarbeitungssystem ein jeweils den Ort der auf den Detektor (2) gelangten elektromagnetischen Strahlung bestimmter Wellenlänge ermittelndes Datenverarbeitungssystem ist.

2. Sensor nach Patentanspruch 1, **dadurch gekennzeichnet, dass** die elektromagnetische Strahlungsquelle (1) für elektromagnetische Strahlung bestimmter Wellenlängen eine Mehrfarben-Lumineszenzdiode ist.

3. Sensor nach Patentanspruch 1, **dadurch gekennzeichnet, dass** im Strahlengang nach der elektromagnetischen Strahlungsquelle (1) ein die elektromagnetische Strahlung beeinflussende Einrichtung angeordnet ist, so dass elektromagnetische Strahlung bestimmter Wellenlänge das Medium durchdringt und auf den Detektor (2) gelangt.

4. Sensor nach Patentanspruch 1, **dadurch gekennzeichnet, dass** das Medium eine wässrige Lösung ist, so dass die Konzentration wenigstens eines Stoffes in der wässrigen Lösung erfassbar ist.

## Claims

1. Sensor for monitoring a medium, comprising at least one electromagnetic radiation source and one detector for electromagnetic radiation, wherein the medium is in the beam path between the electromagnetic radiation source and the detector, as at least one one-dimensional sensor having photodiodes for the refracted electromagnetic radiation, and a spectrum that changes when the medium is changed can be detected, and wherein
- a first part (6) of the housing (5) is a cup-shaped single-piece shaped part consisting of a material that is transparent to the radiation,
- the electromagnetic radiation source (1), the detector (2) and mirrors (10) that deflect the radiation from the electromagnetic radiation source (1) twice in sequence are arranged in the first part (6) such that the electromagnetic radiation source (1) and the detector (2) are placed one adjacent to the other,
- the electromagnetic radiation source (1) is radiation source that emits radiation of certain wavelengths,
- the first part (6) has, for the medium, a recess or a cut-out (8), which has two planes and wall regions that are arranged at an angle to one another and are transparent to the electromagnetic radiation, such that said wall regions and the medium on the wall regions are a prism that refracts the electromagnetic radiation,
- a second part (7) of the housing (5) is a cover (7) such that a self-contained sensor is produced,
- the detector (2) consists of photodiodes arranged in a row or in a matrix,
- the electromagnetic radiation source (1) and the detector (2) are connected to a data-processing system such that radiation of different wavelengths is refracted in sequence in the prism, which is formed by the wall regions and the medium on the wall regions, and resultant spectra can be detected and evaluated, and
- the data-processing system is a data-processing system that determines, in each case, the location of the electromagnetic radiation of a certain wavelength that has reached the detector (2).

2. Sensor according to claim 1, **characterised in that** the electromagnetic radiation source (1) for electromagnetic radiation of certain wavelengths is a multi-colour light-emitting diode.

3. Sensor according to claim 1, **characterised in that** a device that influences the electromagnetic radiation is arranged downstream of the electromagnetic radiation source (1) in the beam path such that electromagnetic radiation of a certain wavelength penetrates the medium and reaches the detector (2).

4. Sensor according to claim 1, **characterised in that** the medium is an aqueous solution such that the concentration of at least one substance in the aqueous solution can be detected.

## Revendications

1. Capteur destiné à la surveillance d'un milieu et comportant au moins une source de rayonnement électromagnétique et un détecteur de rayonnement électromagnétique, le milieu se trouvant dans la trajectoire de rayonnement entre la source de rayonnement électromagnétique et le détecteur en tant qu'au moins un capteur unidimensionnel avec photodiodes pour le rayonnement électromagnétique dévié et un spectre se modifiant avec la modification du milieu pouvant être détecté, et
- une première partie (6) du boîtier (5) étant une pièce moulée monobloc en forme de coupe et constituée d'un matériau transparent pour le rayonnement,
- la source de rayonnement électromagnétique (1), le détecteur (2) et des miroirs (10) déviant deux fois l'une après l'autre le rayonnement de la source de rayonnement électromagnétique (1) sont disposés dans la première partie (6) de telle sorte que la source de rayonnement électromagnétique (1) et le détecteur (2) sont placés l'un à côté de l'autre ;
- la source de rayonnement électromagnétique (1) est une source de rayonnement émettant des rayons de certaines longueurs d'onde,
- la première partie (6) possède une cavité ou une découpe (8) à deux niveaux et avec des zones formant paroi disposées l'une par rapport à l'autre de sorte à former un angle et transparentes pour le rayonnement électromagnétique, pour le milieu, de telle sorte que ces zones formant paroi et le milieu se trouvant sur les zones formant paroi constituent un prisme déviant le rayonnement électromagnétique,
- un deuxième partie (7) du boîtier (5) étant un couvercle (7), de sorte à réaliser un capteur fermé sur lui-même,
- le détecteur (2) est constitué de photodiodes disposées en ligne ou en matrice,
- la source de rayonnement électromagnétique (1) et le détecteur (2) sont reliés à un système de traitement de données, de telle sorte que le rayonnement de différente longueur d'onde est successivement dévié dans le prisme formé des zones formant paroi et du milieu se trouvant sur les zones formant paroi, et les spectres en résultant peuvent être détectés et évalués, et
- le système de traitement de données est un système de traitement de données déterminant respectivement le lieu du rayonnement électromagnétique d'une certaine longueur d'onde arrivé au détecteur (2).

2. Capteur selon la revendication 1, **caractérisé en ce que** la source de rayonnement électromagnétique (1) pour le rayonnement électromagnétique de certaines longueurs d'onde est une diode luminescente multicolore.

3. Capteur selon la revendication 1, **caractérisé en ce qu'**un dispositif influençant le rayonnement électromagnétique est disposé dans la trajectoire de rayonnement après la source de rayonnement électromagnétique (1) de telle sorte qu'un rayonnement électromagnétique d'une certaine longueur d'onde pénètre le milieu et arrive au détecteur (2).

4. Capteur selon la revendication 1, **caractérisé en ce que** le milieu est une solution aqueuse, de telle sorte que la concentration d'au moins une substance peut être détectée dans la solution aqueuse.
